# EUROPEAN PATENT APPLICATION

(11) **EP 4 847 286 A1**
(43) Date of publication of application: **02.12.2026**
(21) Application number: 26171280.6
(22) Date of filing: 08.04.2026
(51) Int. Cl.: B60J 11/06, B60R 1/06

(54) **AN IMPROVED MIRROR PROTECTOR**

(30) Priority: 28.05.2025 GB 202508324
(71) Applicant: Milenco Limited, Wolverton Mill Milton Keynes MK12 5TS (GB)
(72) Inventor: Milbank, Frederick Nigel, Milton Keynes, MK13 0RA (GB)
(74) Representative: Stevens Hewlett & Perkins

(57) **Abstract**

A mirror protector 10 comprises a body 12 for fitting over a vehicle wing mirror 14. The body 12 includes an indent 16 in one side 18 of the body 12 and includes one or more slots 32 on an opposite side 34 of the body 12, wherein the body 12 further comprises connecting means 36 located at the bottom of each slot 32. The mirror protector also comprises one or more inserts 38 located in each respective slot 32 and connected to the connecting means 36 located at the bottom of each respective slot 32.

## Description

This invention relates to a mirror protector.

Motor vehicles such as cars, vans and lorries are usually provided with wing mirrors (sometimes called side view mirrors) that are mounted on the side of the vehicle, which allow the driver of the vehicle to see along the side of their vehicle and behind, without having to turn their head a great distance. In many jurisdictions, the provision of wing mirrors on a motor vehicle is compulsory and it is illegal to drive such a vehicle without properly functioning wing mirrors. However, such wing mirrors are very susceptible to damage, since they extend out from the body of the motor vehicle to which they are connected, and many drivers underestimate the width of their vehicle plus the wing mirrors and/or underestimate the width of other road vehicles.

In order to combat damage to wing mirrors, it is known to provide a mirror protector that can be retrofitted onto an existing wing mirror. The mirror protector is normally formed of plastics material and is fitted onto the wing mirror to protect the wing mirror from minor collisions. Should the mirror protector be damaged, it can be replaced much more easily and cheaply than the cost of replacing a vehicle wing mirror being protected. Such mirror protectors are often used on commercial vehicles as these vehicles are often driven less carefully than private vehicles. It is also relatively common for a vehicle wing mirror to include an external light such as an indicator light. Since such a light has to be seen clearly by other road users, this is often a weak spot that is not properly protected by a mirror protector.

An example of a mirror protector for a vehicle wing mirror protector is disclosed in GB 2570315 A. Disclosed is a mirror protector with a body for fitting over a vehicle wing mirror. The body has an indent in one side of the body. The indent includes one or more notches extending outwards from the body and into the indent. The mirror protector can be retrofitted to an existing wing mirror and can allow an exterior light, such as an indicator light, on the wing mirror to be seen, while also providing some measure of protection for the indicator light. The mirror protector of this document is an improvement in design over conventional mirror protectors but a known problem with many mirror protectors is that they are designed for specifically for known vehicles and can only be used on the vehicle for which they are designed.

It is therefore an object of the invention to improve upon the known art.

According to a first aspect of the present invention, there is provided a mirror protector comprising a body for fitting over a vehicle wing mirror, the body including an indent in one side of the body, and including one or more slots on an opposite side of the body, wherein the body further comprises connecting means located at the bottom of the or each slot, and one or more inserts located in each respective slot and connected to the connecting means located at the bottom of each respective slot.

Owing to the invention, it is possible to provide a mirror protector that can be retrofitted to an existing wing mirror and will be able to be fitted to a much wider range of vehicles than an existing mirror protector, since the mirror protector is provided with slots and inserts in the slots, which can be used in combination to provide a variable size of slot. An end user can select the specific insert that they require to match the dimensions of their vehicle wing mirror and this will provide a good fitting of the mirror protector to the vehicle wing mirror. The user can also remove the inserts in their entirety and fit the mirror protector to their vehicle wing mirror with no inserts present in the slots, if so desired. The connection means is present at the bottom of the slots and this is used to connect an insert to the body of the mirror protector in each slot. Preferably the body includes two slots each with an insert located in a respective slot.

Advantageously, the mirror protector further comprises additional inserts of different sizes, each additional insert suitable for locating in a slot and suitable for connecting to the connecting means located at the bottom of each slot. The mirror protector is preferably provided with additional inserts of different sizes. This provides the end user with the most flexibility in relation to the fitting of the mirror protector to their vehicle wing mirror. The user is able to choose the insert that best matches the requirement of the sizing of the slot that is best able to fit to their vehicle wing mirror.

Ideally, the body further comprises one or more ridges extending outwards from the body and into the indent. The provision of ridges on the body of the mirror protector will allow an exterior light such as an indicator light on the wing mirror to be seen, while also providing some measure of protection for the indicator light. The mirror protector is positioned on the wing mirror such that the external light is located within the indent on the mirror protector and the ridges on the mirror protector will protect the external light from a potential collision while also ensuring that the external light can be seen by other road users.

Preferably, a ridge is located centrally within the indent, the indent includes three ridges and the ridges are evenly spaced within the indent. This preferable arrangement of the ridges on the mirror protector provides a good balance between allowing visibility for any indicator lights on the exterior of the wing mirror to which the mirror protector is fixed, while also providing sufficient protection for the indicator light in the event of a collision involving the wing mirror (protected by the mirror protector) and another object,

Advantageously, the body further includes one or more additional ridges extending outwards from the body on the same side of the body as the indent, the additional ridges not being located in the indent. In a preferred embodiment, the body further includes two additional ridges, one additional ridge located on either side of the indent. The additional ridges provide further protection for the mirror protector and therefore the wing mirror on which the mirror protector. As they are located on the outside of the mirror protector, the two additional ridges help to deflect blows away from the mirror protector.

Embodiments of the present invention will now be described, by way of example only, with reference to the accompanying drawings, in which:-
Figure 1 is a front view of a mirror protector,
Figure 2 is a perspective view from the front of the mirror protector,
Figure 3 is a front view of a mirror protector mounted on a wing mirror,
Figure 4 is a perspective view from the rear of the mirror protector,
Figure 5 is a perspective view from the rear of a second embodiment of the mirror protector, and
Figure 6 is a further perspective view from the rear of a second embodiment of the mirror protector.

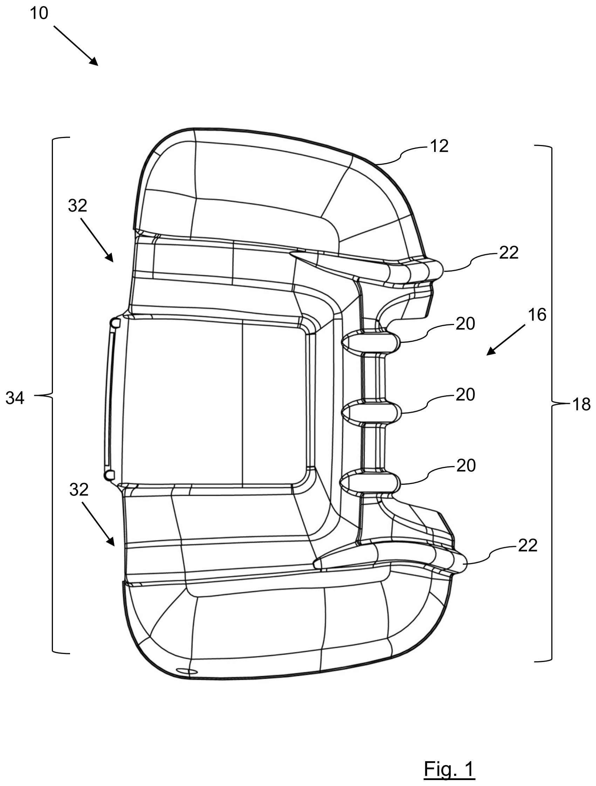

Figure 1 shows a front view of a mirror protector 10 comprising a body 12 for fitting over a vehicle wing mirror, the body 12 including an indent 16 in one side 18 of the body 12, the indent 16 including multiple ridges 20 extending outwards from the body 12 and into the indent 16. One ridge 20 is located centrally within the indent 16. In total, the indent 16 includes three ridges 20 and the ridges 20 are evenly spaced within the indent 16. Each ridge 20 extends into the indent 16 by no more than 50% of the width of the indent 16. The indent 16 provides an open area for an external light on the wing mirror to remain visible, with the ridges 20 protecting the light against damage. Each ridge 20 comprises a rib 20 on the surface of the body 12.

The body 12 further includes multiple additional ridges 22 extending outwards from the body 12 on the same side 18 of the body 12 as the indent 16, the additional ridges 22 not being located in the indent 16. In the preferred arrangement, the body 12 further includes two additional ridges 22, one additional ridge 22 located on either side of the indent 16. These additional ridges 22 provide additional protection for the mirror protector 10 and therefore for the wing mirror on which the mirror protector 10 is mounted. The two sets of ridges 20 and 22 provide protection for the body 12 of the mirror protector in the event of a collision. Each additional ridge 22 comprises a rib 22 on the surface of the body 12.

The body 12 also includes one or more slots 32 on an opposite side 34 of the body 12. In this embodiment, there are two such slots 32. Although they cannot be seen in this Figure, the body 12 also further comprises connecting means located at the bottom of each slot 32. The slots 32 and the connecting means are provided to support the connection of the mirror protector 10 to a wide variety of different sized wing mirrors, since the slots 32 can have an insert located therein which is secured with the connection means. The use of the inserts enable the size of the slots 32 to be varied according to how best they will fit the user's wing mirror. The user will select the correctly sized insert to adjust the size of the slots 32 to better fit their vehicle wing mirror.

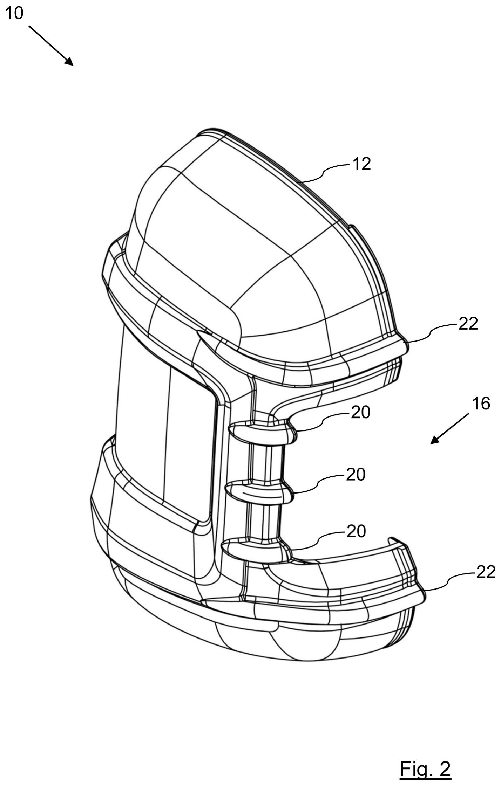

Figure 2 shows the mirror protector 10 in a perspective from below and from one side. The body 12 is formed with a shell like shape from a single piece of moulded plastics material. The mirror protector 10 is for retrofitting to an existing vehicle wing mirror such as the wing mirror of a commercial van and the mirror protector 10 will assist in protecting the wing mirror from damage, in the event of a collision that causes contact to the wing mirror. The three ridges 20 can be seen in the Figure, which are located within the indent 16 that is present on the one side 18 of the body 12 of the mirror protector 10.

The elongate additional ridges 22 can also be seen which are located on opposite sides of the indent 16, which in normal operation of the mirror protector will be above and below the indent 16. These ridges 22 are parallel to each other and terminate at the edge of the body 12. These additional ridges 22 provide further protection for the vehicle wing mirror in the region of the indent 16, helping to deflect objects away from the open area of the mirror protector 10. The open area defined by the indent 16 is designed to allow an indicator light on the wing mirror to be seen by other road users.

The three ridges 20 within the indent 16 and the two additional ridges 22 on either side of the indent 16 provide protection for the indicator light that is present on the wing mirror on which the mirror protector 10 is mounted, while allowing the indicator light to be visible. The curvature of the body 12 of the mirror protector 10 also allows collisions to be deflected as best as possible, with the two sets of ridges 20 and 22 each having a curved exterior profile. A perpendicular cross section through each of the ridges 20 and 22 has a curved exterior line. These curves help to deflect collisions from the mirror protector 10 and prevent damage.

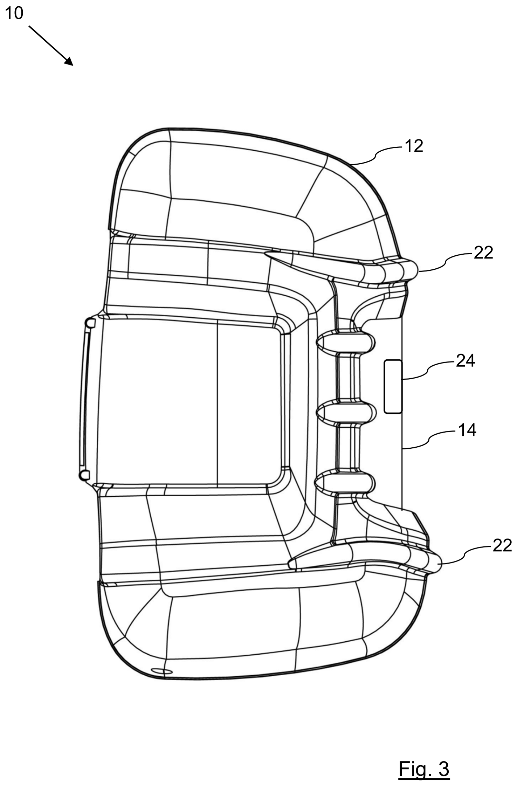

Figure 3 shows a view similar to Figure 1, but here the mirror protector 10 is shown mounted on a wing mirror 14 (also known as a side view mirror). Only a small part of the wing mirror 14 is visible, in the location of the indent 16 of the mirror protector 10. The remainder of the wing mirror 14 is covered by the body 12 of the mirror protector 10. An indicator light 24 can be seen, which is part of the wing mirror 14. The indicator light 24 must not be covered by the mirror protector 10, as the purpose of the indicator light 24 is to provide other road users with a warning that the motor vehicle is turning or about to turn.

The indent 16 matches up with the indicator light 24, and this can be because the mirror protector 10 is specifically designed for the vehicle type in question on which the mirror protector 10 is mounted or because a more general mirror protector 10 is used, which is designed to be fitted to the wing mirrors of many different makes and models of vehicle. In the latter case, many wing mirrors are similar in their size and shape, with the indicator light 24 often being located in a similar location on the outside of the wing mirror 14 and usually towards the middle of the side 18 where it is located.

As can be seen in this Figure, the three ridges 20 are constructed and located in order to provide protection for the indicator light 24 of the wing mirror 14 in the event of a collision to the vehicle wing mirror 14. Any blow in the locality of the indicator light 24 will stand a good chance of being deflected by one or more of the ridges 20, which are located in the indent 16 and extend outwards into the indent 16 by a distance not greater than 50% of the width of the indent 16. The additional ridges 22 which are located one on either side of the indent 16 provide additional protection in the vicinity of the indent 16.

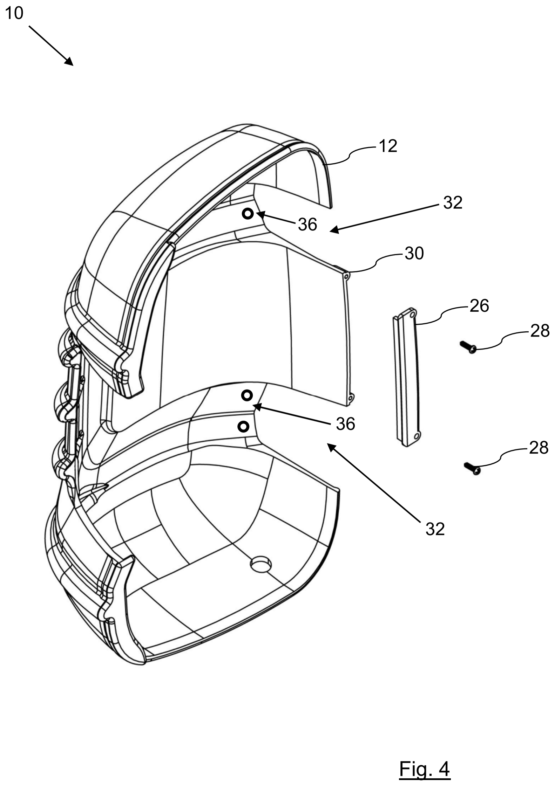

Figure 4 shows a view of the mirror protector 10 from the rear, which allows the slots 32 to be seen more clearly. The body 12 further comprises connecting means 36 located at the bottom of each slot 32. The body 12 can be seen from the opposite side from the views shown in the previous Figures. The body 12 is formed as a single piece of moulded plastics material which is formed in a single plastics mould using a technique such as injection moulding. The body 12 is in the shape of a shell that covers the front of a wing mirror 14 and provides as much protection as possible for collisions involving the wing mirror 14, with any contact likely to be with the mirror protector 10 and not with the wing mirror 14 itself.

The mirror protector 10 further includes a fixing plate 26 which can be used to fix the mirror protector 10 in place on the wing mirror 14. Screws 28 are provided which mate with screw holes 30 provided in the body 12 of the mirror protector 10. In order to mount the mirror protector 10 onto a wing mirror 14, then the body 12 alone is mounted onto the front of the wing mirror 14 and the fixing plate 26 is then brought into contact with body 12 of the mirror protector 10 and fixed in place with the screws 28. The fixing plate 26 essentially acts as an anchor, holding the body 12 in place tightly against the wing mirror 14.

In this way a mirror protector 10 can be retrofitted to an existing wing mirror 14. The mirror protector 10 allows an exterior light such as an indicator light 24 on the wing mirror 14 to be seen, while also providing protection for the indicator light 24. The mirror protector 10 is positioned on the wing mirror 14 such that the indicator light 24 is located within the indent 16 on the mirror protector 10 and the ridges 20 on the mirror protector 10 protect the indicator light 24 from a potential collision while also ensuring that the indicator light 24 can be seen by other road users.

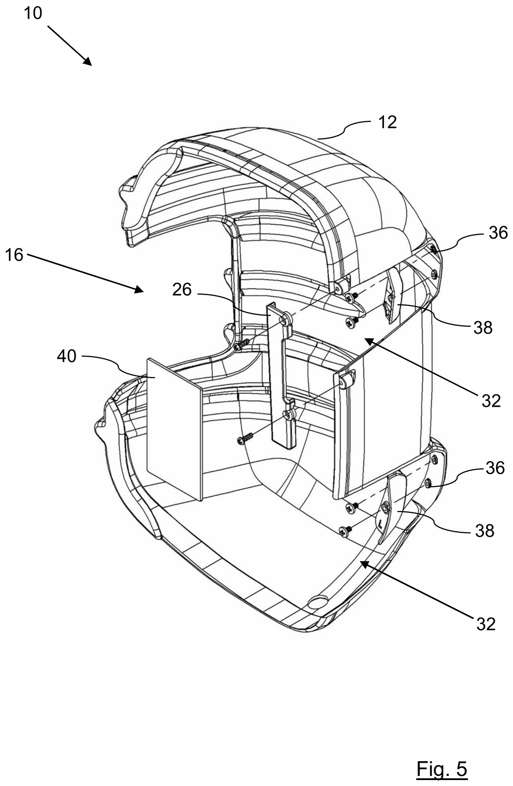

Figure 5 shows a second embodiment of the mirror protector 10. This embodiment of the mirror protector 10 differs from the first embodiment of the mirror protector 10 shown in Figures 1 to 4 only in slight differences in the external shape of the mirror protector 10. In all other functional respects, the mirror protector of Figure 5 operates in the same manner as first embodiment. The mirror protector 10 is designed to be retrofitted to a vehicle wing mirror 14 and will protect that wing mirror 14 from any collisions that would ordinarily cause damage to the wing mirror 14. As above, the mirror protector 10 is able to be fitted to a wider range of wing mirror sizes.

The mirror protector 10 comprises a body 12 for fitting over a vehicle wing mirror 14, the body 12 including an indent 16 in one side 18 of the body 12, and including two more slots 32 on an opposite side 34 of the body 12, wherein the body 12 further comprises connecting means 36 located at the bottom of each slot 32. Two inserts 38 are located in each respective slot 32 and are connected to the connecting means 36 located at the bottom of each respective slot 32. The fixing plate 26 can also be seen in this Figure along with a foam pad 40 which can be used when the mirror protector 10 is being fitted to the vehicle wing mirror 14.

The inserts 38 are designed to be located in the bottom of the slots 32. The inserts 38 can be secured to the connecting means 36 that is present in the bottom of each slot 32. The use of the inserts 38 allows the size of the slot 32 to be adjusted and this increases the range of vehicle wing mirrors 14 to which the mirror protector 10 can be fitted. Different sized inserts 38 can be provided to the end user and the user can select the inserts 38 that best match the fitting that they are trying to achieve between the mirror protector 10 and wing mirror 14. The user is not obliged to use the inserts 38, they could leave the slots 32 fully open.

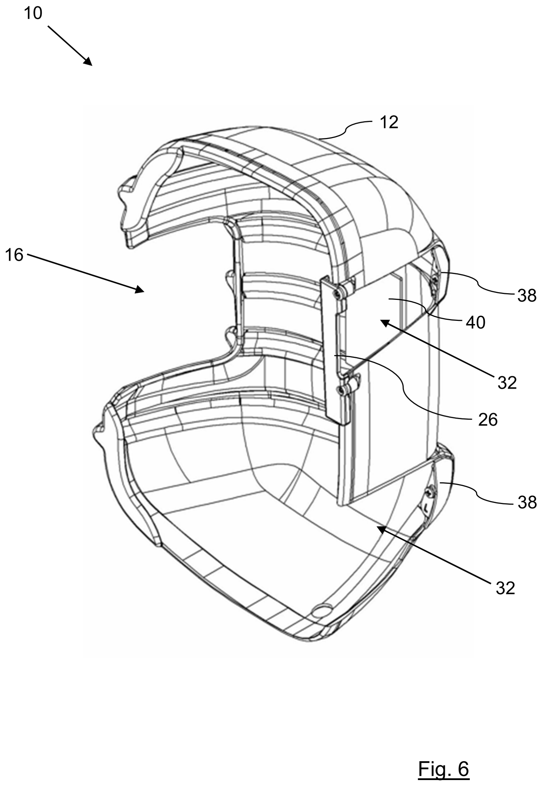

Figure 6 shows the same view of the mirror protector as in Figure 5, but with the various components now fixed in place. The two inserts 38 have been fixed into position at the bottom of the respective slots 32. The fixing plate 26 is shown screwed into position in as it would be after the mirror protector 10 has been fitted to a wing mirror. The foam pad 40 is also shown in the position that it would take after the mirror protector 10 has been fitted to a wing mirror. The inserts 38 have connected to the connection means 36 that is present at the bottom of each of the respective slots 32.

## Claims

1. A mirror protector (10) comprising:
• a body (12) for fitting over a vehicle wing mirror (14), the body (12) including an indent (16) in one side (18) of the body (12), and including one or more slots (32) on an opposite side (34) of the body (12), wherein the body (12) further comprises connecting means (36) located at the bottom of the or each slot (32), and
• one or more inserts (38) located in each respective slot (32) and connected to the connecting means (36) located at the bottom of each respective slot (32).

2. A mirror protector according to claim 1, wherein the body (12) includes two slots (32) each with an insert (38) located in a respective slot (32).

3. A mirror protector according to claim 1 or 2, and further comprising additional inserts (38) of different sizes, each additional insert suitable for locating in a slot (32) and suitable for connecting to the connecting means (36) located at the bottom of each slot (32).

4. A mirror protector according to claim 1, 2 or 3, wherein the body (12) further comprises one or more ridges (20) extending outwards from the body (12) and into the indent (16).

5. A mirror protector according to claim 4, wherein a ridge (20) is located centrally within the indent (16).

6. A mirror protector according to claim 4 or 5, wherein the indent (16) includes three ridges (20).

7. A mirror protector according to claim 6, wherein the ridges (20) are evenly spaced within the indent (16).

8. A mirror protector according to any preceding claim, wherein the body (12) further includes one or more additional ridges (22) extending outwards from the body (12) on the same side (18) of the body (12) as the indent (16), the additional ridges (22) not being located in the indent (16).

9. A mirror protector according to claim 8, wherein the body (12) further includes two additional ridges (22), one additional ridge (22) located on either side of the indent (16).
